# EUROPEAN PATENT SPECIFICATION

(11) **EP 2 727 883 B1**
(45) Date of publication and mention of the grant of the patent: **11.07.2018**
(21) Application number: 13191301.4
(22) Date of filing: 01.11.2013
(51) Int. Cl.: C02F 1/20, B01D 61/58, B01D 19/00, C02F 1/44, C02F 1/42, C02F 1/00, C02F 9/00, C02F 1/32, C02F 1/66, C02F 103/06

(54) **Process for the sustainable purification of water and a suitable apparatus therefor**
Verfahren zur nachhaltigen Reinigung von Wasser und eine geeignete Vorrichtung dafür
Procédé pour l'épuration durable de l'eau et appareil approprié à cet effet

(30) Priority: 02.11.2012 NL 2009751
(43) Date of publication of application: 07.05.2014
(73) Proprietor: Vitens N.V., 8019 BE Zwolle (NL)
(72) Inventor: BAKKER, Simon Marinus, 8016 HX ZWOLLE (NL); VAN PAASSEN, Jacobus Antonius Maria, 8016 DZ ZWOLLE (NL); SCHIPPERS, Doeke, 8748 AS WITMARSUM (NL)
(74) Representative: Algemeen Octrooi- en Merkenbureau B.V.

(56) References cited:
- WO-A1-2010/115233
- GB-A- 2 381 761
- US-A1- 2005 139 546
- US-A1- 2006 196 836
- US-A1- 2006 272 500
- US-A1- 2010 288 308
- US-A1- 2011 303 090
- US-A1- 2012 039 792
- US-A1- 2012 137 883

## Description

The present invention relates to a process for the sustainable purification of water by application of a number of intermediate steps, which include (membrane)filtration, water softening, ion exchange and aeration. Further the present invention relates to an apparatus for carrying out the said process.

Drinking water is in general obtained by pumping up ground water and the collection of surface water. It is also possible to obtain drinking water by desalination of sea water. Ground water is substantially rainwater that has sunk into the ground until the water reaches an impermeable layer. At certain locations ground water contains certain quantities of methane. The presence of methane is above all indicated by the presence of layers of peat whereby the amount of methane in certain cases can be 40 mg/l. The presence of methane in the water to be purified is undesirable, in particular with respect to the growth of bacteria in certain process steps, in particular in the use of filters which can lead to undesirable situations, and therefore the methane is required to be removed from the water, for example by application of, for example, plate aerators. A disadvantage of such plate aerators is that methane is released into the atmosphere whereby methane ends up in the environment. Methane is seen as a gas that influences the green house effect. It is therefore desirable to reduce the release of methane to the atmosphere.

The American publication US 2005/0139546 relates to a method for the removal of nitrogen from an anaerobic fermented manure stream, whereby the thereby recovered nitrogen can be used, for example, to prepare fertilizer. Furthermore, this American document discloses a tripping tower whereby methane is produced that after incineration can be used to produce electricity for driving turbines.

The American publication US 2012/0137883 relates to a method for the treatment of a gas water mixture by application of standard purification steps, such as a membrane bioreactor and a membrane installation, in order to produce water, whereby the gas water separation takes place without further specifying what is done with thereby obtained gas.

The American publication US 2006/0272500 relates to a method for the removal of volatile components from an aqueous stream, whereby vacuum is applied to abstract gas from the liquid stream, in combination with a membrane installation.

The American publication US 2006/096836 relates to a method for the treatment of salt water by application of standard purification steps, whereby a reagent is added to the water in order to bring about a precipitation reaction, whereafter the thus formed solid product is removed.

The American publication US 2010/0288308 relates to a method for the preparation of very pure water, whereby a number of purifications steps is applied in series, including a degassing step in which vacuum is applied.

The international application WO 2010/115233 relates to a method for preparing drinking water, whereby a number of unit operations in series is arranged, including amongst others including a degassing step, a nitrification step, a de-nitrification step and an oxidation step.

The American publication US 2012/0039792 relates to a method for the treatment of water whereby in a first step the gasses and volatile organic components are removed from the water to be treated by stripping the water with nitrogen of carbon dioxide, where after the thus degassed water is subjected to a number of unit operations.

The American publication 2011/0303090 relates to a method for removing methane from for example an aqueous stream, whereby the water to be treated is supplied to a separation chamber and at that location is separated into a methane stream which is discharged via an outlet as an energy source and by another outlet is further processed.

The British publication GB 2 381 761 relates to a method for removing methane from a liquid, whereby methane is removed from the stream of water to be treated, whereafter the mixture of air and methane can be burned or further treated.

An aim of the present invention is therefore the provision of a process for the sustainable purification of water whereby the gasses present in the water to be purified is reused in a useful way.

Another aim of the present invention is the provision of a process for the sustainable purification of water whereby the release into the atmosphere of gasses present in the water to be treated is limited to a minimum.

A further aim of the present invention is the provision of a process for the sustainable purification of water whereby the gasses present in the water to be treated are recovered and whereby such gasses are converted into products or energy streams which can be further used in the treatment of the water to be purified.

The present invention, as described in the introduction, is directed at a process for the sustainable purification of water by application of a number of treatment steps which include (membrane)filtration, water softening and aeration, the process comprising the following steps:
i) vacuum degassing water
ii) incinerating the gasses obtained in step i)
iii) further treating the degassed water obtained in step i) in one or more treatment steps,
characterised in that the released incineration products in step ii), in particular CO₂ and water, energy, heat are at least in part usefully re-used in one or more of the said treatment steps, wherein the degassed water from step i) is subjected to a treatment step a) that is pre-filtration, whereafter the thereby pre-filtered water is subjected to a treatment step b), which is a water softening, whereby at least a part of the CO2 formed in step ii) is supplied to treatment step b), the water softening applied in treatment step b) comprising an ion exchange process and a pellet water softening.

By using the said steps i) - ii) one or more of the said aims is achieved. In particular a so called vacuum degassing step is carried out in step i) whereby a low pressure of approximately 0.8 bar is created whereby the methane dissolved in the ground water is released and via the vacuum is transported to a gas storage facility. In order to facilitate the removal of the gas present in the water as much as possible, packing or filling agents, in particular rings, are used in the so called degassing kettle during the vacuum degassing step. Therefore according to the invention it is possible to remove more than 90% of the methane present in the water and further process the thus obtained methane. The gasses obtained in step i) are thereafter incinerated in step ii), whereby by using a gas turbine electricity is produced, which electricity can be used in the further process of the sustainable purification of water. Not only electricity is produced by the incineration of methane but also other useful gas streams are produced here in particular carbon dioxide (CO₂) and water.

The water which has been subjected to vacuum degassing is preferably subjected to an intermediate step a), that is pre filtration, in particular a sand filter, where after the thus the pre filtered water preferably is subjected to an intermediate step b), that is a water softening, whereby at least a part of the CO₂ formed in step ii) is added to step b). Also during step a) a concentration stream is obtained which can be further treated, for example as described hereafter.

In a preferred embodiment it is also possible that before intermediate step a) takes place, the degassed water is subjected to a so called plate aeration whereby the still remaining amount of methane is removed from the already degassed water, whereby also other dissolved gasses can be removed, including CO₂. Less aeration by the plate aeration is necessary because a degassing step was already carried out in step i), thereby less capacity in the plates aerators is necessary, with respect to a water purification process whereby no vacuum degassing has previously taken place.

It is desirable that the water softening applied in intermediate step b) comprises an ion exchange process and a pellet water softening, whereby the water that has been subjected to a pre filtration in intermediate step a) is in part directly subjected to an ion exchange process and for a part is directly subjected to a pellet water softening process in intermediate step b).

It is above all desirable that carbon dioxide formed in step ii) during the incineration of the methane obtained from the water, is used as a input stream in the ion exchange process that takes place in intermediate step b). The ion exchange process, as applied in intermediate step b), comprises in particular a mixed bed of a weak acid ion exchanger in the free acid form and a strong basic ion exchanger in the hydro carbonate form, whereby the input water stream to the intermediate step b) is disconcerted from one or more components chosen from the group of in particular Ca, Mg and in smaller amounts the anions SO₄, NO₃ and Cl. Carbon dioxide is used in said ion exchange process for the regeneration of the therein used resin. During the regeneration HCO₃ develops by 4 CO₂ + 4 H₂O → H₂CO₃ → 4 H⁺ + 4 HCO₃⁻ (at 6 bar). Thereby CO₂ is reused. It is possible to achieve a regeneration of approximately 95%.

In the herein said ion exchange process a residual stream is obtained, which residual stream is supplied to the pellet water softening. This residual stream of mostly CaCO₃ is incorporated in the pellet water softening in the thereby used sand which is used as a carrier material. The pellets of sand and CaCO₃, also fine grain sand and calcite, can be removed from the process and sold to purchasers for further uses. Such pellets can also be used for de-acidification.

In the pellet water softening step a residual stream of CaCO₃ is created, which CaCO₃ residual stream can be converted into CaO by burning and subsequently brought into contact with demineralised water, in particular obtained by carrying out step ii), whereby the thereby obtained calcium liquid is added to the pellet water softening. Therefore the CO₂ formed in step ii) is not only recovered in the water purification process in particular in step b), but also in step ii).

In the present process fine grain sand is not used, instead crystals consisting of CaCO₃ are used. An advantage of this is that otherwise CaO and fine grain sand must be separated from each other. In a first preferred embodiment fine grain sand is used for the treatment of the waste stream and NaOH and the pellets are used for de-acidification processes or transported to external purchasers. According to a second preferred embodiment crystals of CaCO₃ and limewater are used. This limewater is obtained by incineration of pellets from the present process. This creates unquenched calcium (CaO) that is quenched with demineralised water such is obtained by the incineration of the gas mixture in step ii) after degassing the raw water according to step i).

In the present application intermediate step b), that is water softening, can be summarized as an ion exchange process and a pellet water softening, whereby a residual stream from the ion exchange process is applied to the pellet water softening. Also the ion exchange process is provided with CO₂ as obtained during the degassing of water, for example, as discussed above in step i). By the re-use of CO₂ in the ion exchange process the advantageous re-use of residual streams is realised.

As a result of the above discussed intermediate step b) a water stream is obtained which is devote of one or more components chosen from the group of in particular Ca, Mg, and to a lesser extent SO₄, NO₃, and Cl, which thereby softened water stream is preferably subjected to an after filtration step, in particular a sand filter, which process step is referred to as intermediate step c).

As a result of the after filtration intermediate step c) a concentrate stream is obtained, which concentrate stream is preferably mixed with the above described concentration stream obtained in intermediate step a), whereafter an intermediate step f) is carried out, in particular an ultrafiltration. In a preferred embodiment it is desirable that the concentrate stream obtained in intermediate step c) and/or the concentrate stream obtained in intermediate step a) are supplied to an intermediate step f), that is an ultrafiltration step, whereby the product stream obtained in intermediate step f) is optionally subjected to an intermediate step g), that is a treatment with UV radiation. Therefore after intermediate step g) a purified water stream is obtained which can be further used in one of the intermediate steps of the present application.

For the removal of colour forming components it is further desirable that the water stream subjected to intermediate step c) is further treated in an intermediate step d), that is a ion exchange process whereby colour forming components is removed. The resin composition applied in such a process is regenerated by application of a salt stream, whereby a considerable reduction in the amount of salt to be applied can be obtained by subjecting the brine stream obtained in intermediate step d) to an intermediate step k), that is nano filtration, whereby the concentrate stream obtained in intermediate step k) is used to regenerate the ion exchange resin used in intermediate step d). In the present method it has been found that 60% of the salt needed can be recovered, whereby a constitute of salt of approximately 40% is used in the regeneration step. In a particularly preferable embodiment it is further desirable that the concentrate is further treated by a filtration whereby the salt use by further 20% can be reduced and pure NOM (natural organic matter) with a low salt content can be obtained. This gives a yield of obtained salt of about 80% and furthermore practically pure NOM is obtained, which residual stream can be usefully applied in further processes.

The present invention also describes that at least a part of the energy obtained in step ii) is applied as electrical energy during carrying out one or more intermediate steps a) to h). It is further desirable that the product stream obtained in intermediate step k), which product stream is rich in NOM (natural organic matter), is removed and optionally further used, in particular due to the composition thereof, for example in agriculture feed components, such as plant feeds.

In a particular embodiment it is desirable that at least a part of the CO₂ formed in step ii) is applied in one or more of intermediate steps a) to h). In order to correct to pH.

It is on the other hand possible that at least part of the gasses obtained in step i) in particular CH₄, are converted to liquid gas, which liquefied gas can further be usefully re-used.

In a particular embodiment it is preferable that at least a part of the heat obtained in step ii) is applied in the drying of residual streams containing solid substances, obtained in one or more intermediate steps a) to h).

For an advantageous energy usage it is desirable that at least a part of the energy obtained in step ii) is applied as electrical energy when carrying out one or more intermediate steps a) to h).

On the basis of the present invention it has also been found that in particular by application of vacuum degassing in step i), a significant reduction in environmental damage can be realised by the reduction in the release of the greenhouse gas methane. Above all the concentration of methane available for bacterial growth is reduced. It is desirable to achieve a methane content of less than 200 µg/l in the water stream to be treated to prevent excessive bacterial growth in the filters. A subsequent advantage of the present invention is the useful re-use of the water streams, for example for the quenching of chock whereby the products obtained in the water softening step can be applied, but also the useful use of the recovered methane for electricity generation and the useful application of the carbon dioxide obtained during the burning insinuation in step ii) for the ion exchange process in intermediate step b). In cases where the recovered methane gas in step i) is not fully used in the insinuation process in step ii) than it is also possible to further process the gas elsewhere, for example by supplying to third parties, in particular the gas network. The said supplying to the gas network requires treating the gas to be delivered in particular due to the high concentration of CO₂ in the raw gas mixture.

The present invention is further described on the basis of a figure, which is not mean to be limiting in any way.

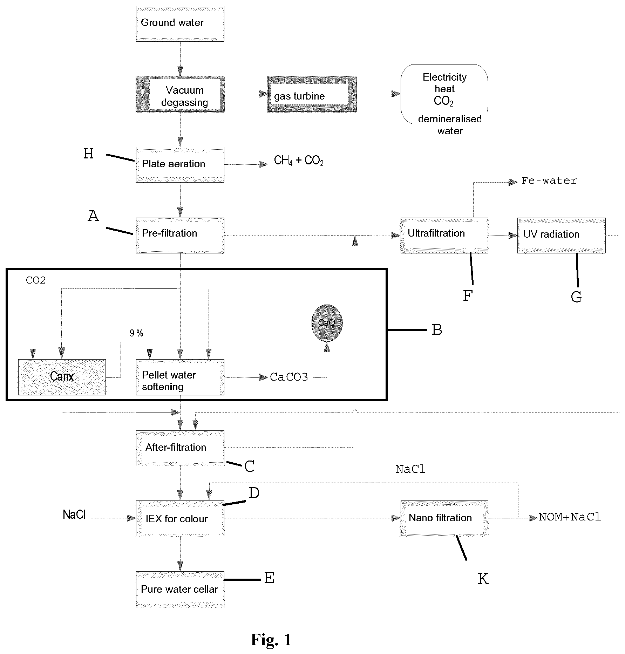

The attached figure shows the schematic process according chosen a schematic process the present invention.

Ground water is pumped up and subsequently subjected in step i) to vacuum degassing, whereby the obtained gasses, in particular methane, are burned whereby energy is generated by a gas turbine. The thereby obtained process streams, in particular electricity, heat, CO₂ and demineralized water, are suitable for further application in the present water purification process. The degassed water from step i) can subsequently be subjected to a plate aeration in intermediate step h), whereby remaining quantities of gas can be removed from the water, in particular methane and CO₂. Such recovered gasses can, if desired, be supplied to the gasses already obtained in step i). it is also possible to release the said gasses, which comprise small quantities, to the atmosphere. Subsequently a pre-filtration in intermediate step a) occurs, whereby the thus pre-filtered water is subjected to a water softening an intermediate step b). The concentrate stream obtained by the pre-filtration is supplied to an intermediate step f), that is an ultrafiltration step, by which ultrafiltration step ion sludge is obtained. The obtained ion sludge can, for example be thickened whereby again use can be made in the energy streams obtained in step ii). After such ultrafiltration step there is a treatment with UV radiation in intermediate step g).

The intermediate step b) shown in the figure can be summarized as an ion exchange process and a pellet water softening, whereby the CO₂ obtained by vacuum degassing in step i) is supplied to the ion exchange process, which process has been described in detail above. In the ion exchange process a residual stream is created which is supplied to the pellet water softening. In the pellet water softening a calcium carbonate containing residual stream is formed, which after insinuation and mixing with demineralized water can be resupplied to the pellet water softening as lime water. Water stream subjected to intermediate step b) is subjected to a after filtration in intermediate step c), whereby the after filtration in intermediate step c) can also be carried out with the UV radiation intermediate step g) separated water stream. In the present figure the after filtration is carried out on two streams, that is the water stream separated out in intermediate step b) and the water stream separated out intermediate step g). The pellets can be applied in different uses, for example in an insinuation step and quenching of the formed lime water, but also in purification processes.

In the after filtration in intermediate step c) a concentrate is obtained which can be supplied to the above described ultra filtration intermediate step f), optionally together with the concentrate stream obtained in pre-filtration intermediate step a).

The treated water in intermediate step c) is further treated in a decolouring step d) whereby use is also made of an ion exchange process. The concentrate stream obtained in intermediate step d), also known as the brine solution or brine stream, due to the high concentration of salts, is supplied to intermediate step k), that is nano filtration, whereby a product stream rich in NOM (natural organic matter) is obtained and the salt stream obtained by nano filtration is resupplied to intermediate step d). Thereby the use of salt in intermediate step d) is limited to a minimum. Finally the water purified in the said intermediate steps is stored in a so-called rain water cellar, that is intermediate step e).

The present invention relates to the degassing of ground water whereby recovered methane is incinerated whereby energy is produced and CO₂ containing streams are obtained, which CO₂ containing streams can be usefully re-used in the water softening process. Further the present invention relates to in particular the useful re-use of water streams, in particular washing water, in diverse intermediate steps. Also an useful application of NOM containing product stream is envisaged. Further is the salt use considerable reduced by recovering of the salt stream and re-use in the regeneration of the resin composition used. Above all a ion rich sludge is obtained, which after optional thickening by use of the released heat in one of the in the earlier steps, usefully can be applied.

The said integration of residual streams in the present method for the sustainable purification of water is one of the important aims of the present invention. The invention relates to an inverted, energy integration, whereby in particular the degassing of water and thereby obtained methane stream plays an important role. Further it is important to re-use the CO₂ stream obtained by the incineration of methane in the purification process, whereby a clear integration of process steps is seen.

## Claims

1. Process for the sustainable purification of water by application of a number of treatment steps which include (membrane)filtration, water softening and aeration, the process comprises the following steps:
i) vacuum degassing water
ii) incinerating the gasses obtained in step i)
iii) further treating the degassed water obtained in step i) in one or more treatment steps,
**characterised in that** the released incineration products in step ii), in particular CO₂ and water, energy, heat are at least in part usefully re-used in one or more of the said treatment steps, wherein the degassed water from step i) is subjected to an treatment step a) that is pre-filtration, whereafter the thereby pre-filtered water is subjected to an treatment step b), which is a water softening, whereby at least a part of the CO₂ formed in step ii) is supplied to treatment step b), the water softening applied in treatment step b) comprising an ion exchange process and a pellet water softening.

2. Process according to claim 1, **characterised in that** said pre-filtration is a sand filter.

3. Process according to claim 2, **characterised in that** the pre-filtered water from treatment step a) is supplied in part directly to the ion exchange process and in part directly to the water softening in treatment step b).

4. Process according to one or more of claims 1 to 3, **characterised in that** the CO₂ formed in step ii) is supplied to the ion exchange process.

5. Process according to one or more of claims 1 to 4, **characterised in that** the ion exchange process used in treatment step b) is a mixed bed of weak acid ion exchanger in free acid form and a strong basic ion exchanger in the hydro carbonate form, whereby the water stream supplied to treatment step b) is disconcerted from one or more of the components chosen from the group of Ca, Mg, SO₄, NO₃ and Cl.

6. Process according to one or more of claims 1 to 5, **characterised in that** a residual stream, obtained by the ion exchange process used in treatment step b), is supplied to the pellet water softening.

7. Process according to one or more of claims 1 to 6, **characterised in that** a residual stream of CaCO₃ is obtained from the pellet water softening applied in treatment step b), which CaCO₃ residual stream is incinerated to CaO and subsequently brought into contact with water, in particular obtained by carrying out step ii), whereby the thereby obtained lime water is supplied to the pellet water softening.

8. Process according to one or more of the aforementioned claims, **characterised in that** the water stream subjected to treatment step b), in particular derived from the ion exchange process and the pellet water softening, is further treated in an treatment step c), that is an after filtration step, in particular a sand filter, in particular that the stream subjected to treatment step c) further is treated in an treatment step d), that is an ion exchange process for the removal of colour forming components, in particular that the brine stream obtained in treatment step d) is subjected to an treatment step k), that is nano filtration, whereby in treatment step k) a concentrate stream is obtained which is used for the regeneration of the ion exchange resin applied in treatment step d), preferably that the in treatment step k) obtained product stream, which product stream is rich in NOM (Natural organic matter), is removed.

9. Process according to one or more of the aforementioned claims, **characterised in that** the concentrate stream obtained in treatment step c) and/or the obtained concentrate stream from the treatment step a) is supplied to an treatment step f), that is an ultrafiltration step, whereby the product stream obtained in treatment step f) optionally is subjected to an treatment step g), that is a treatment with UV radiation, in particular that the concentrate stream obtained in treatment step f) is drained off.

10. Process according to one or more of the aforementioned claims, **characterised in that** before treatment step a) is carried out, the degassed water from step i) is subjected to an treatment step h), that is an aeration step to remove residual gasses such as CH₄ and CO₂ from the already degassed water from step i), which residual gasses in particular are released to the atmosphere.

11. Process according to one or more of the aforementioned claims, **characterised in that** at least a part of the CO₂ formed in step ii) is applied in one or more treatment steps a) to h) for the correction of pH.

12. Process according to one or more of the aforementioned claims, **characterised in that** at least a part of the gasses obtained in step i), in particular CH₄, are compressed to liquid gas, which liquefied gas is used as a fuel component for motor vehicles.

13. Process according to one or more of the aforementioned claims, **characterised in that** at least a part of the heat obtained in step ii) is used for drying the residual streams containing solid substances, obtained in one or more treatment steps a) to h).

14. Process according to one or more of the aforementioned claims, **characterised in that** at least a part of the energy obtained in step ii) is used as electrical energy in carrying out one or more of treatment steps a) to h).

## Patentansprüche

1. Verfahren für die nachhaltige Reinigung von Wasser durch die Anwendung einer Reihe von Behandlungsschritten, welche (Membran)Filtration, Wasserenthärtung und Belüftung einschließen, wobei das Verfahren die folgenden Schritte umfasst:
i) Vakuumentgasung des Wassers
ii) Verbrennung der in Schritt i) erhaltenen Gase
iii) Weiterbehandlung des in Schritt i) erhaltenen entgasten Wassers in einem oder mehreren Behandlungsschritten,
**dadurch gekennzeichnet, dass**
die in Schritt ii) freigewordenen Verbrennungsprodukte, insbesondere CO₂ und Wasser, Energie, Hitze wenigstens teilweise nutzbar in einem oder mehreren der Behandlungsschritte wiederverwendet werden, wobei das entgaste Wasser aus Schritt i) einem Behandlungsschritt a), der Vorfiltrierung ist, unterzogen wird, wonach das dadurch vorfiltrierte Wasser einem Behandlungsschritt b), welcher eine Wasserenthärtung ist, unterzogen wird, wobei wenigstens ein Teil des in Schritt ii) gebildeten CO₂ dem Behandlungsschritt b) zugeführt wird und das im Behandlungsschritt b) angewendete Wasserenthärten einen Ionenaustauschprozess und ein Granulat-Wasserenthärten umfasst.

2. Verfahren nach Anspruch 1,
**dadurch gekennzeichnet, dass**
die Vorfiltrierung ein Sandfilter ist.

3. Verfahren nach Anspruch 2,
**dadurch gekennzeichnet, dass**
das vorfiltrierte Wasser aus dem Behandlungsschritt a) zum Teil direkt dem Ionenaustauschprozess zugeführt wird und zum Teil direkt dem Wasserenthärten im Behandlungsschritt b).

4. Verfahren nach einem oder mehreren der Ansprüche 1 bis 3,
**dadurch gekennzeichnet, dass**
das in Schritt ii) gebildete CO₂ dem Ionenaustauschprozess zugeführt wird.

5. Verfahren nach einem oder mehreren der Ansprüche 1 bis 4,
**dadurch gekennzeichnet, dass**
der im Behandlungsschritt b) verwendete Ionenaustauschprozess ein Mischbett aus schwachem saurem Ionenaustauscher in freier Säureform und einem starken basischem Ionenaustauscher in der Hydrokarbonat-Form ist, wobei der dem Behandlungsschritt b) zugeführte Wasserstrom von einer oder mehreren Komponenten, ausgewählt aus der Gruppe von Ca, Mg, SO₄, NO₃ und Cl, unterbrochen wird.

6. Verfahren nach einem oder mehreren der Ansprüche 1 bis 5,
**dadurch gekennzeichnet, dass**
ein Reststrom, erhalten durch den im Behandlungsschritt b) verwendeten Ionenaustauschprozess, dem Granulat-Wasserenthärten zugeführt wird.

7. Verfahren nach einem oder mehreren der Ansprüche 1 bis 6,
**dadurch gekennzeichnet, dass**
ein Reststrom von CaCO₃ vom im Behandlungsschritt b) angewandten Granulat-Wasserenthärten erhalten wird, dieser CaCO₃ Reststrom wird zu CaO verbrannt und anschließend in Kontakt mit Wasser gebracht, insbesondere erhalten durch die Durchführung des Schritts ii), wobei das dadurch erhaltene Kalkwasser dem Granulat-Wasserenthärten zugeführt wird.

8. Verfahren nach einem oder mehreren der voranstehenden Ansprüche,
**dadurch gekennzeichnet, dass**
der dem Behandlungsschritt b) unterzogene Wasserstrom, insbesondere abgeleitet vom Ionenaustauschprozess und der Granulat-Wasserenterhärtung, in einem Behandlungsschritt c) weiterbehandelt wird, welcher ein Nachfiltrierungsschritt ist, insbesondere ein Sandfilter, insbesondere, dass der dem Behandlungsschritt c) unterzogene Strom in einem Behandlungsschritt d) weiterbehandelt wird, welcher ein Ionenaustauschprozess zur Entfernung von farbbildenden Komponenten ist, insbesondere, dass der im Behandlungsschritt d) erhaltene Laugestrom einem Behandlungsschritt k) unterzogen wird, welcher eine Nanofiltrierung ist, wobei im Behandlungsschritt k) ein Konzentratstrom erhalten wird, welcher für die Regeneration des im Behandlungsschritt d) angewendeten lonenaustauschharzes verwendet wird, vorzugsweise, dass der im Behandlungsschritt k) erhaltene Produktstrom, welcher Produktstrom reich an NOM (Natürlicher organischer Materie) ist, entfernt wird.

9. Verfahren nach einem oder mehreren der voranstehenden Ansprüche,
**dadurch gekennzeichnet, dass**
der im Behandlungsschritt c) erhaltene Konzentratstrom und/oder vom Schritt a) erhaltene Konzentratstrom einem Behandlungsschritt f) zugeführt wird, welcher ein Ultrafiltrationsschritt ist, wobei der im Behandlungsschritt f) erhaltene Produktstrom optional einem Behandlungsschritt g) unterzogen wird, welcher eine Behandlung mit UV-Strahlung ist, insbesondere, dass der im Schritt f) erhaltene Konzentratstrom entwässert wird.

10. Verfahren nach einem oder mehreren der voranstehenden Ansprüche,
**dadurch gekennzeichnet, dass**
bevor der Behandlungsschritt a) durchgeführt wird, das entgaste Wasser aus dem Schritt i) einem Behandlungsschritt h) unterzogen wird, welcher ein Belüftungsschritt zur Entfernung von Restgasen wie CH₄ und CO₂ vom bereits entgasten Wasser aus Schritt i) ist, wobei die Restgase insbesondere in die Atmosphäre freigegeben werden.

11. Verfahren nach einem oder mehreren der voranstehenden Ansprüche,
**dadurch gekennzeichnet, dass**
wenigstens ein Teil des im Schritt ii) gebildeten CO₂ in einem oder mehreren Behandlungsschritten a) bis h) angewendet wird für die Korrektur des pH.

12. Verfahren nach einem oder mehreren der voranstehenden Ansprüche,
**dadurch gekennzeichnet, dass**
wenigstens ein Teil der in Schritt i) erhaltenen Gase, insbesondere CH₄, zu Flüssiggas komprimiert werden, wobei das verflüssigte Gas als Kraftstoffkomponente für Kraftfahrzeuge verwendet wird.

13. Verfahren nach einem oder mehreren der voranstehenden Ansprüche,
**dadurch gekennzeichnet, dass**
wenigstens ein Teil der in Schritt ii) erhaltenen Hitze für die Trocknung des feste Substanzen enthaltenden Reststroms, erhalten in einem oder mehreren Behandlungsschritten a) bis h).

14. Verfahren nach einem oder mehreren der voranstehenden Ansprüche,
**dadurch gekennzeichnet, dass**
wenigstens ein Teil der in Schritt ii) erhaltenen Energie als elektrische Energie zum Durchführen eines oder mehrerer Behandlungsschritte a) bis h) verwendet wird.

## Revendications

1. Procédé pour l'épuration durable de l'eau par application d'un certain nombre d'étapes de traitement qui incluent la filtration (sur membrane), l'adoucissement de l'eau et l'aération, le procédé comprend les étapes suivantes :
i) le dégazage sous vide de l'eau
ii) l'incinération des gaz obtenus dans l'étape i)
iii) le traitement supplémentaire de l'eau dégazée obtenue dans l'étape i) en une ou plusieurs étape(s) de traitement,
**caractérisé en ce que** les produits d'incinération libérés dans l'étape ii), en particulier CO₂ et l'eau, l'énergie et la chaleur sont réutilisés au moins en partie de manière utile dans une ou plusieurs desdites étapes de traitement, où l'eau dégazée provenant de l'étape i) est soumise à une étape de traitement a) qui est une préfiltration, après quoi l'eau ainsi préfiltrée est soumise à une étape de traitement b), qui est un adoucissement de l'eau, moyennant quoi au moins une partie du CO₂ formé dans l'étape ii) est fournie à l'étape de traitement b), l'adoucissement de l'eau appliqué dans l'étape de traitement b) comprenant un procédé d'échange d'ions et un adoucissement de l'eau par granulés.

2. Procédé selon la revendication 1, **caractérisé en ce que** ladite préfiltration se fait par un filtre à sable.

3. Procédé selon la revendication 2, **caractérisé en ce que** l'eau préfiltrée provenant de l'étape de traitement a) est fournie en partie directement au procédé d'échange d'ions et en partie directement à l'adoucissement de l'eau dans l'étape de traitement b).

4. Procédé selon une ou plusieurs des revendications 1 à 3, **caractérisé en ce que** le CO₂ formé dans l'étape ii) est fourni au procédé d'échange d'ions.

5. Procédé selon une ou plusieurs des revendications 1 à 4, **caractérisé en ce que** le procédé d'échange d'ions utilisé dans l'étape de traitement b) se fait par un lit mélangé d'un échangeur d'ions faiblement acide sous forme d'acide libre et d'un échangeur d'ions fortement basique sous forme d'hydrocarbonate, moyennant quoi le courant d'eau fourni à l'étape de traitement b) est dépourvu d'un ou de plusieurs des composants choisis dans le groupe de Ca, Mg, SO₄, NO₃ et Cl.

6. Procédé selon une ou plusieurs des revendications 1 à 5, **caractérisé en ce qu'**un courant résiduel, obtenu par le procédé d'échange d'ions utilisé dans l'étape de traitement b), est fourni à l'adoucissement de l'eau par granulés.

7. Procédé selon une ou plusieurs des revendications 1 à 6, **caractérisé en ce qu'**un courant résiduel de CaCO₃ est obtenu à partir de l'adoucissement de l'eau par granulés appliqué dans l'étape de traitement b), lequel courant résiduel de CaCO₃ est incinéré en CaO et par la suite amené en contact avec l'eau, en particulier obtenue en réalisant l'étape ii), moyennant quoi l'eau de chaux ainsi obtenue est fournie à l'adoucissement de l'eau par granulés.

8. Procédé selon une ou plusieurs des revendications susmentionnées, **caractérisé en ce que** le courant d'eau soumis à l'étape de traitement b), en particulier dérivé du procédé d'échange d'ions et de l'adoucissement de l'eau par granulés, est en outre traité dans une étape de traitement c), qui est une étape d'après filtration, en particulier par un filtre à sable, en particulier **en ce que** le courant soumis à l'étape de traitement c) est en outre traité dans une étape de traitement d), qui est un procédé d'échange d'ions pour l'élimination de composants chromogènes, en particulier **en ce que** le courant de saumure obtenu dans l'étape de traitement d) est soumis à une étape de traitement k), qui est une nano-filtration, moyennant quoi dans une étape de traitement k) un courant de concentré est utilisé pour la régénération de la résine échangeuse d'ions appliquée dans l'étape de traitement d) est obtenu, de préférence **en ce que** le courant de produit obtenu dans l'étape de traitement k), lequel courant de produit est riche en NOM (matières organiques naturelles), est éliminé.

9. Procédé selon une ou plusieurs des revendications susmentionnées, **caractérisé en ce que** le courant de concentré obtenu dans l'étape de traitement c) et/ou le courant de concentré obtenu provenant de l'étape de traitement a) est/sont fourni(s) à une étape de traitement f), qui est une étape d'ultrafiltration, moyennant quoi le courant de produit obtenu dans l'étape de traitement f) est éventuellement soumis à une étape de traitement g), qui est un traitement par rayonnement UV, en particulier **en ce que** le courant de concentré obtenu dans l'étape de traitement f) est évacué.

10. Procédé selon une ou plusieurs des revendications susmentionnées, **caractérisé en ce qu'**avant la réalisation de l'étape de traitement a), l'eau dégazée provenant de l'étape i) est soumise à une étape de traitement h), qui est une étape d'aération pour éliminer les gaz résiduels tels que CH₄ et CO₂ de l'eau déjà dégazée provenant de l'étape i), lesquels gaz résiduels sont en particulier libérés dans l'atmosphère.

11. Procédé selon une ou plusieurs des revendications susmentionnées, **caractérisé en ce qu'**au moins une partie du CO₂ formé dans l'étape ii) est appliquée dans une ou plusieurs étape(s) de traitement a) à h) pour la correction du pH.

12. Procédé selon une ou plusieurs des revendications susmentionnées, **caractérisé en ce qu'**au moins une partie des gaz obtenus dans l'étape i), en particulier CH₄, est comprimée en gaz liquide, lequel gaz liquéfié est utilisé comme composant combustible pour des véhicules automobiles.

13. Procédé selon une ou plusieurs des revendications susmentionnées, **caractérisé en ce qu'**au moins une partie de la chaleur obtenue dans l'étape ii) est utilisée pour sécher les courants résiduels contenant des matières solides, obtenus dans une ou plusieurs étape(s) de traitement a) à h).

14. Procédé selon une ou plusieurs des revendications susmentionnées, **caractérisé en ce qu'**au moins une partie de l'énergie obtenue dans l'étape ii) est utilisée comme énergie électrique dans la réalisation d'une ou de plusieurs des étapes de traitement a) à h).
